# EUROPÄISCHE PATENTSCHRIFT

(11) **EP 3 105 465 B1**
(45) Veröffentlichungstag und Bekanntmachung des Hinweises auf die Patenterteilung: **14.03.2018**
(21) Anmeldenummer: 15709824.5
(22) Anmeldetag: 22.01.2015
(51) Int. Cl.: F16D 13/72, F16D 13/64, F16D 69/00, F16D 13/70, F16D 65/02

(54) **KUPPLUNGSPLATTE**
CLUTCH PLATE
PLATEAU D'EMBRAYAGE

(30) Priorität: 11.02.2014 DE 102014202421
(43) Veröffentlichungstag der Anmeldung: 21.12.2016
(73) Patentinhaber: Schaeffler Technologies AG & Co. KG, 91074 Herzogenaurach (DE)
(72) Erfinder: WIEGE, Viktor, 77815 Bühl (DE)
(86) Internationale Anmeldenummer: PCT/DE2015/200020
(87) Internationale Veröffentlichungsnummer: WO 2015/120844

(56) Entgegenhaltungen:
- EP-A1- 0 810 383
- US-A1- 2009 047 197
- US-A1- 2013 192 950

## Beschreibung

Die Erfindung betrifft eine Kupplungsplatte sowie ein Verfahren zur Herstellung einer Kupplungsplatte, wobei es sich bei der Kupplungsplatte um eine Komponente einer Ein- oder Mehrscheibenkupplung handeln kann.

Aus der DE 43 45 215 B4 ist ein Kupplungsaggregat mit einer einzelnen Kupplungsscheibe bekannt, welche zwischen einer Druckplatte und einer Gegendruckplatte einklemmbar ist. Die Druckplatte stellt ebenso wie die Gegendruckplatte eine Kupplungsplatte dar, welche jeweils eine Reibfläche aufweist. Die aus der DE 43 45 215 B4 bekannte Kupplung weist weiter eine Nachstellvorrichtung auf, welche den Verschleiß der Reibbeläge der Kupplungsscheibe kompensiert.

Im Fall einer Doppelkupplung ist, wie prinzipiell aus der DE 10 2005 037 514 A1 bekannt, zusätzlich zu zwei Druckplatten eine Zwischendruckplatte als Kupplungsplatte vorgesehen. Eine solche Zwischendruckplatte wird auch als Zentralplatte bezeichnet. Beispielhaft wird in diesem Zusammenhang auf die DE 10 2011 102 326 A1 verwiesen. Der mehrteilige Aufbau einer Zentralplatte einer Kupplung ist beispielsweise aus der DE 10 2013 202 773 A1 bekannt.

Aus der US 2013/0 192 950 ist eine Kupplungsplatte mit mehreren konzentrisch angeordneten, ringförmigen Elementen gezeigt, deren Kontaktflächen mit unterschiedlichen Materialien beschichtet sind. Der Erfindung liegt die Aufgabe zugrunde, eine Kupplungsplatte gegenüber dem genannten Stand der Technik sowohl in fertigungstechnischer Hinsicht als auch hinsichtlich der Produkteigenschaften weiterzuentwickeln.

Diese Aufgabe wird erfindungsgemäß gelöst durch eine Kupplungsplatte mit den Merkmalen des Anspruchs 1 sowie durch ein Verfahren zur Herstellung einer Kupplungsplatte gemäß Anspruch 10. Im Folgenden im Zusammenhang mit dem Herstellungsverfahren erläuterte Ausgestaltungen und Vorteile der Erfindung gelten sinngemäß auch für die Vorrichtung und umgekehrt.

Die Kupplungsplatte ist mehrteilig aufgebaut, wobei in ein ringförmiges, ein U-förmiges Profil aufweisendes Blechteil eine insgesamt ebenfalls ringförmige Blechpackung eingelegt ist. Die Stirnseiten einzelner Lagen der Blechpackung bilden zusammen eine Reibfläche der Kupplungsplatte. Aufgrund der unmittelbaren Bildung der Reibfläche durch die Blechpackung stellt diese eine für die Eigenschaften der Kupplungsplatte besonders bedeutsame thermische Masse dar. In das U-förmig profilierte, die Blechpackung haltende Blechteil wird dagegen beim Betätigen der Kupplung nicht unmittelbar Wärme durch Reibung eingetragen. Somit ist das äußere, U-förmig profilierte Blechteil der Kupplungsplatte primär hinsichtlich mechanischer Eigenschaften auslegbar, während die in dem U-förmig profilierten Blechteil fixierte Blechpackung hinsichtlich thermischer Eigenschaften optimierbar ist.

Gemäß einer ersten Ausführungsform ist die Blechpackung durch mindestens ein aufgewickeltes Blechband gebildet. Eine zweite Ausführungsform sieht vor, dass einzelne Blechringe konzentrisch ineinander gesetzt sind und damit die Blechpackung bilden.

In beiden Ausführungsformen ist die Blechpackung vorzugsweise aus Blechlagen unterschiedlicher Werkstoffe gebildet. Die verschiedenen Blechlagen unterscheiden sich hierbei insbesondere hinsichtlich ihrer Wärmeleitfähigkeit voneinander. Weiter können zwischen den verschiedenen Blechlagen Unterschiede bezüglich der Wärmekapazität, des thermischen Ausdehnungskoeffizienten und der Dichte gegeben sein. Ebenso weisen die verschiedenen Blechlagen in bevorzugter Ausgestaltung ein unterschiedliches Abriebverhalten auf.

Eine bevorzugte Werkstoffkombination ist durch Blechlagen eines ersten Typs aus Stahlblech und Blechlagen eines zweiten Typs aus Aluminium oder einer leichtmetallhaltigen Legierung gegeben. Vorzugsweise ist die Blechpackung alterierend aus jeweils einer Blechlage ersten Typs und einer Blechlage zweiten Typs aufgebaut. Abweichend hiervon können auch mehrere Blechlagen desselben Typs übereinander gelegt sein.

Die Zusammensetzung der Kupplungsplatte aus einer eine thermische Masse bildenden Blechpackung einerseits und einen diese Blechpackung zumindest teilweise umschließenden, in jedem Fall haltenden, profilierten Blechteil andererseits hat auch fertigungstechnische Vorteile, da für die Herstellung der Blechpackung Materialien gewählt werden können, welche im Vergleich zum profilierten, die Blechpackung haltenden Blechteil weniger stark umformbar sind. Für das profilierte Blechteil kann dagegen ein Material gewählt werden, welches einen hohen Umformgrad zulässt, wobei es in diesem Fall im Gegensatz zur die Reibfläche bildenden Blechpackung weniger auf die thermischen Eigenschaften ankommt.

Durch den Aufbau der Blechpackung aus dünnen Blechlagen mit unterschiedlichen physikalischen Eigenschaften wird für eine besonders gleichmäßige Wärmeverteilung innerhalb der als thermische Masse fungierenden Blechpackung gesorgt. Vorzugsweise ist die Wandstärke der Blechlagen geringer als die Wandstärke des U-förmig profilierten Blechteils. Die Wärmeabfuhr von der Blechpackung ist gemäß einer vorteilhaften Weiterbildung dadurch verbessert, dass die Stirnseiten der einzelnen Blechlagen auf der der Reibfläche gegenüberliegenden Seite der Blechpackung nicht in einer einzigen Ebene liegen. Vielmehr ist gemäß dieser Ausgestaltung durch die Blechlagen eine Rippenstruktur an einer Oberfläche der Blechpackung gebildet.

Die Blechpackung kann in dem oder an dem U-förmig profilierten Blechteil stoffschlüssig, kraftschlüssig und/oder formschlüssig gehalten sein. In entsprechender Weise können auch die einzelnen Blechlagen der Blechpackung untereinander verbunden sein. In einer fertigungstechnisch besonders vorteilhaften Ausführungsform greift das U-förmig profilierte Blechteil formschlüssig, beispielsweise in Form einer Sicke oder einzelner Prägepunkte, in die äußerste Lage der Blechpackung ein, während auch zwischen den einzelnen Blechlagen formschlüssige Verbindungen gebildet sind.

Das auch als Fassung bezeichnete U-förmig profilierte Blechteil kann neben der Fixierung der Blechpackung weitere Funktionen aufweisen, die von der Umgebungskonstruktion abhängen. Beispielsweise können in die Fassung Auflageelemente für Komponenten eines Betätigungssystems der Kupplung integriert sein. Auch die Integration von Laschen oder anderen Haltestrukturen für die Befestigung einer Blattfeder oder eines Drucktopfes ist möglich. Ebenso kann die Fassung der Kupplungsplatte Durchbrüche aufweisen, welche sowohl die Masse der Kupplungsplatte reduzieren als auch für eine verbesserte Wärmeabfuhr von der Blechpackung sorgen. In allen Fällen sind innerhalb der Fassung vorzugsweise Verstärkungsstrukturen ausgebildet. Die nur teilweise Abdeckung der der Reibfläche abgewandten Seite der Blechpackung durch das profilierte Blechteil ist auch in Ausführungsformen realisierbar, in welchen durch die Blechlagen der Blechpackung Kühlrippen gebildet sind.

Im Fall der Ausbildung der Kupplungsplatte als Zentralplatte einer Doppelkupplung weist die Fassung vorzugsweise zu jeder Stirnseite hin ein U-Profil auf. Insgesamt ist das profilierte Blechteil damit in der Art eines Doppel-T-Profils gestaltet. Die beiden in der Fassung der Zentralplatte aufgenommenen Blechpackungen können abweichend hiervon auch in Radialrichtung zueinander versetzt, das heißt ineinander geschachtelt sei, so dass die Zentralplatte besonders wenig Bauraum in axialer Richtung einnimmt. Die beiden Kupplungsscheiben, welche die Zentralplatte kontaktieren, sind in diesem Fall unterschiedlich groß.

Alternativ kann eine als Zentralplatte einer Doppelkupplung vorgesehene Kupplungsplatte eine erste Reibfläche aufweisen, welche durch eine Blechpackung gebildet ist, sowie eine zweite Reibfläche, welche durch das die Blechpackung haltende Blechteil oder durch einen Belag auf diesem Blechteil gebildet ist.

Die Kupplungsplatte ist insbesondere für die Verwendung in einer trockenen Kupplung, auch Doppelkupplung, geeignet. Die Kupplungsplatte ist in folgenden Schritten herstellbar:
Ausgangsprodukt ist eine Blechplatine, aus welcher durch spanlose Prozesse, das heißt durch Umformung, ein ringförmiges, profiliertes Blechteil hergestellt wird. Durch die Profilierung wird mindestens ein Ringraum beschrieben, in welchen eine Blechpackung derart eingelegt wird, dass die Schmalseiten der einzelnen Blechlagen, aus welchen die Blechpackung aufgebaut ist, eine durchgehende Reibfläche bilden. Durch einen weiteren umformenden Verarbeitungsschritt, welcher ohne Beschränkung der Allgemeinheit als Verprägen bezeichnet wird, wird anschließend eine formschlüssige Verbindung zwischen der Blechpackung und
dem profilierten Blechteil hergestellt. Hierdurch wird die Blechpackung zumindest in axialer Richtung der Kupplungsplatte gegenüber dem profilierten Blechteil gesichert. Zusätzlich kann durch die Verprägung auch eine Sicherung in Umfangsrichtung hergestellt oder verstärkt werden. Alternativ ist es möglich, die Sicherung der Blechpackung gegenüber dem ebenfalls ringförmigen, profilierten Blechteil bereits in einem früheren Verfahrensschritt durch die Geometrie der Blechlagen sowie des profilierten, diese haltenden Blechteils herzustellen. Nach dem Zusammenbau der Kupplungsplatte kann die durch die Blechpackung gebildete Reibfläche einer abschließenden Bearbeitung, insbesondere durch Schleifen, unterzogen werden.

Nachfolgend werden Ausführungsbeispiele der Erfindung anhand einer Zeichnung näher erläutert. Hierin zeigen:
- Fig. 1: eine Prinzipdarstellung einer nicht beanspruchten Kupplungsanordnung zur Erläuterung möglicher Verformungen innerhalb der Kupplungsanordnung,
- Fig. 2 bis 4: in verschiedenen Ansichten ein erstes Ausführungsbeispiel einer Kupplungsplatte mit gewickelter Blechpackung,
- Fig. 5 und 6: ein zweites Ausführungsbeispiel einer Kupplungsplatte mit gewickelter Blechpackung,
- Fig. 7 und 8: ein Ausführungsbeispiel einer als Zentralplatte einer Doppelkupplung ausgebildeten Kupplungsplatte mit zwei gewickelten Blechpackungen,

Einander entsprechende oder prinzipiell gleichwirkende Teile sind in allen Fällen mit den gleichen Bezugszeichen gekennzeichnet.

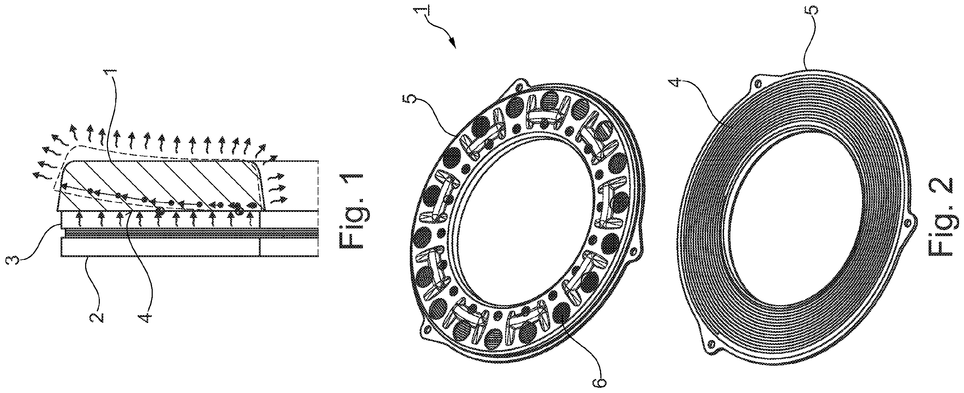

In Fig. 1 ist schematisch eine Kupplungsplatte 1, nämlich Druckplatte, sowie eine diese kontaktierende Kupplungsscheibe 2 einer nicht weiter dargestellten Kupplung skizziert. Die Kupplung ist für die Verwendung in einem Kraftfahrzeug mit Handschaltgetriebe oder automatisiertem Getriebe geeignet.

Ein Reibbelag 3 der Kupplungsscheibe 2 liegt an einer Reibfläche 4 der Kupplungsplatte 1 an. Die Kupplungsplatte 1 ist in der Anordnung nach Fig. 1 in prinzipiell bekannter Weise als massives Metallteil gestaltet. Ein Wärmeeintrag von der Kupplungsscheibe 2 in die Kupplungsplatte 1 ist in Fig. 1 durch eine Mehrzahl an Pfeilen innerhalb des Reibbelags 3 symbolisiert. Dieser Wärmeeintrag sorgt innerhalb der Kupplungsplatte 1 für Kräfte, welche in Fig. 1 durch mehrere, radial nach außen länger werdende Pfeile veranschaulicht sind. Diese Kräfte führen zu einer Verformung der Kupplungsplatte 1, sodass diese die in Fig. 1 gestrichelt eingezeichnete Kontur annimmt. Die Kupplungsplatte 1 tordiert hierbei um eine neutrale Faser im Inneren ihres Querschnitts, sodass der Reibradius nach innen wandert und sich die Kontaktfläche zwischen dem Reibbelag 3 und der Kupplungsplatte 1 reduziert. Hieraus resultiert eine Reduzierung des übertragbaren Moments zwischen der Kupplungsscheibe 2 und der Kupplungsplatte 1. Bei herkömmlichen Kupplungen wird diesem Effekt durch ausreichend massive Gestaltung der Kupplungsplatte 1 entgegengewirkt.

Gemäß der Erfindung wird einer nachteiligen Verformung der Kupplungsplatte 1 nicht durch deren besonders massive Gestaltung, sondern durch deren mehrteiligen Aufbau entgegengewirkt, wobei zwei Komponenten 5,6, nämlich ein ringförmiges Blechteil 5 und eine in dieses eingelegte Blechpackung 6, jeweils dünnwandig gestaltet sind.

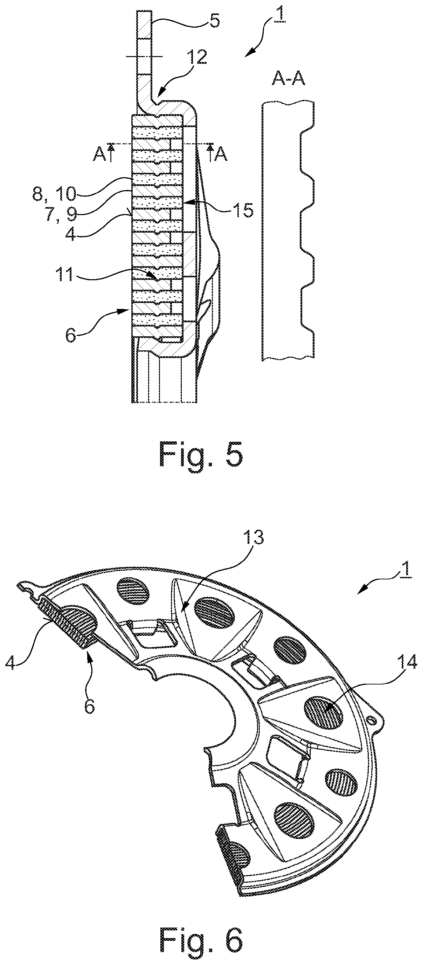

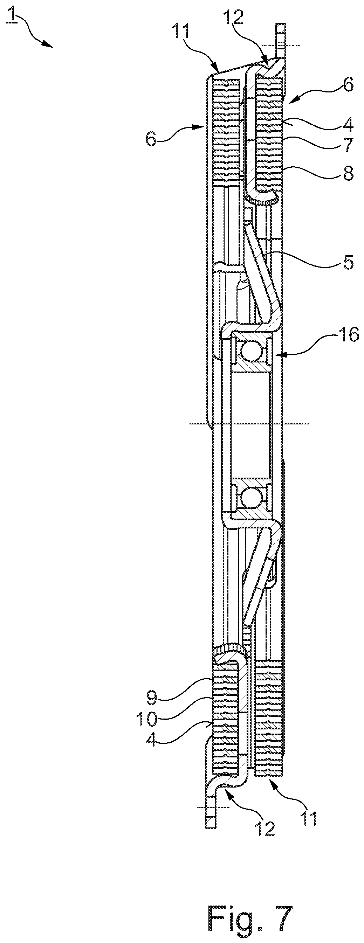

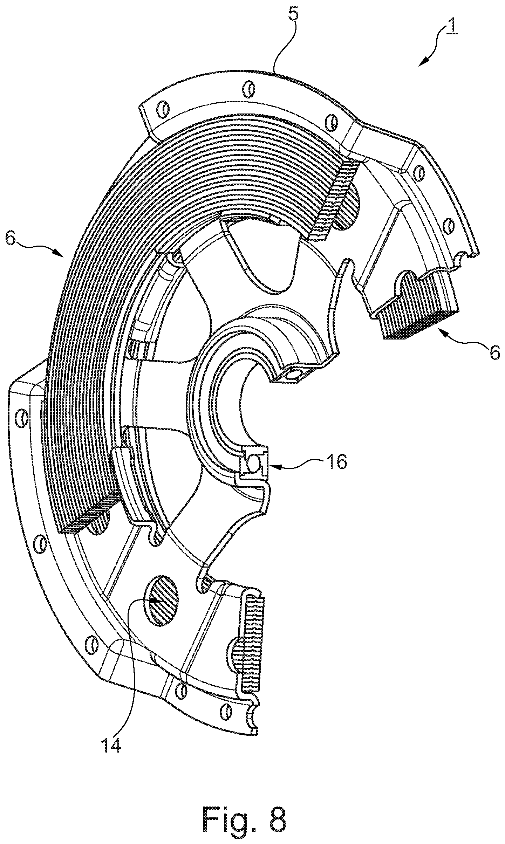

Die nachfolgenden Erläuterungen beziehen sich, soweit nicht anders vermerkt, sowohl auf das Ausführungsbeispiel nach den Fig. 2 bis 4 als auch auf das Ausführungsbeispiel nach den Fig. 5 und 6, sowie auf das Ausführungsbeispiel nach den Fig. 7 und 8, welches sich im Unterschied nach den vorgenannten Ausführungsbeispielen nicht auf eine einfache Kupplung, sondern auf eine Doppelkupplung bezieht.

In allen Fällen beschreibt das insgesamt ringförmige Blechteil 5 zumindest ein zur Reibfläche 4 hin offenes U-Profil. In dieses U-Profil ist die Blechpackung 6, welche aus einzelnen Blechlagen 7,8 aufgebaut ist, eingelegt. Ein erstes Blechband 9 aus Stahlblech bildet die Blechlagen 7, während ein zweites Blechband 10 aus Aluminiumblech die Blechlagen 8 bildet.

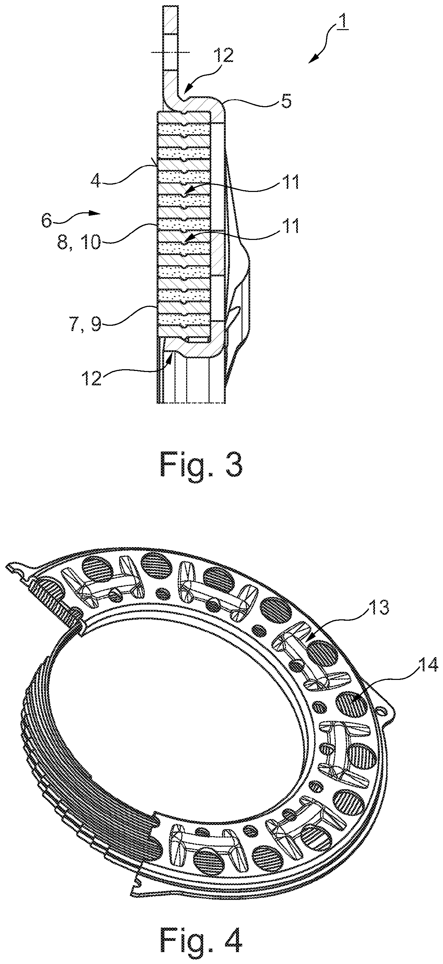

Bei der Fertigung der Blechpackung 6 werden die Blechbänder 9,10 zunächst übereinander gelegt und dann aufgewickelt. Wie aus den Figuren 3 und 5, sowie aus Fig. 8 hervorgeht, weisen die Blechbänder 9,10 eine über ihre ganze Länge verlaufende Sicke 11 auf, sodass sie im aufgewickelten Zustand ineinander verzahnt sind. Die radial innerste sowie radial äußerste Blechlage 7 der Blechpackung 6 ist jeweils durch eine Prägestruktur 12 des Blechteils 5 in diesem gehalten, sodass die Blechpackung 6 insgesamt in dem profilierten Blechteil 5 fixiert ist. Die Wandstärke jedes Blechbandes 9,10 ist geringer als die Wandstärke des Blechteils 5.

Sowohl im Ausführungsbeispiel nach den Figuren 2 bis 4 als auch im Ausführungsbeispiel nach den Figuren 5 bis 6 weist das Blechteil 5 Verstärkungsstrukturen 13 auf. In beiden Fällen sind Öffnungen 14 in dem die Blechpackung 6 haltenden Blechteil 5 erkennbar, welche die Wärmeabfuhr von der Blechpackung 6 begünstigen.

Die der Reibfläche 4 gegenüberliegende Oberfläche der Blechpackung 6 ist im Ausführungsbeispiel nach den Fig. 2 bis 4, ebenso wie die Reibfläche 4, eben. Entsprechendes gilt für die mittig in der Kupplungsplatte 1 liegenden Oberflächen der Blechpackungen 6.

Abweichend hiervon ist im Ausführungsbeispiel nach den Fig. 5 und 6 die Rückseite der Blechpackung 6, das heißt die der Reibfläche 4 abgewandte Oberfläche der Blechpackung 6, profiliert, sodass spiralförmige Kühlrippen 15 gebildet sind.

Im Ausführungsbeispiel nach den Fig. 7 und 8 weist das ringförmige, durch spanlose Umformung hergestellte, als Fassung fungierende Blechteil 5 zu jeder Stirnseite hin ein U-Profil auf, in welchem jeweils eine Blechpackung 6 gehalten ist, deren Aufbau der Blechpackung 6 des Ausführungsbeispiels nach den Figuren 2 bis 4 entspricht. Die beiden Blechpackungen 6, durch welche jeweils eine Reibfläche 4 bereitgestellt ist, weisen identische Abmessungen auf. Die Öffnungen 14 im Blechteil 5 dienen im Fall der als Zentralplatte einer Doppelkupplung ausgebildeten Kupplungsplatte 1 gemäß Fig. 7 und 8 hauptsächlich der Material- und Gewichtseinsparung. Das Blechteil 5 und damit die gesamte Kupplungsplatte 1 ist mittels eines Wälzlagers 16, nämlich Kugellagers, auf einer nicht dargestellten Welle der als trockene Kupplung ausgebildeten Doppelkupplung gelagert.

Die Spiralform der Blechlagen 7,8 hat in allen Ausführungsformen gegenüber einzelnen konzentrischen, jeweils geschlossenen Blechringen den Vorteil, dass in allen radialen Bereichen der Reibfläche 4, mit Ausnahme der innersten und äußersten Blechlagen 7, sowohl das Blechband 9 als auch das Blechband 10 eine in den Figuren 2 bis 6 nicht dargestellte Kupplungsscheibe kontaktieren. Somit wird ein gleichmäßiger Abrieb der Kupplungsscheibe trotz unterschiedlicher Materialeigenschaften der Blechbänder 9,10 erreicht.

### Bezugszeichenliste

- 1: Kupplungsplatte
- 2: Kupplungsscheibe
- 3: Reibbelag
- 4: Reibfläche
- 5: Blechteil
- 6: Blechpackung
- 7: Blechlage
- 8: Blechlage
- 9: Blechband
- 10: Blechband
- 11: Sicke
- 12: Prägestruktur
- 13: Verstärkungsstruktur
- 14: Öffnung
- 15: Kühlrippen
- 16: Wälzlager

## Patentansprüche

1. Kupplungsplatte(1), mit einem ringförmigen, ein U-förmiges Profil aufweisenden Blechteil (5), sowie mit einer mehrlagigen, in das U-förmige Profil eingelegten Blechpackung (6), wobei eine Reibfläche (4) durch Schmalseiten einzelner Blechlagen (7,8) gebildet ist.

2. Kupplungsplatte(1) nach Anspruch 1, **dadurch gekennzeichnet, dass** mehrere Blechlagen (7,8) durch ein aufgewickeltes Blechband (9,10) gebildet sind.

3. Kupplungsplatte(1) nach Anspruch 1, **dadurch gekennzeichnet, dass** mehrere Blechlagen (7,8) durch einzelne Blechringe gebildet sind.

4. Kupplungsplatte(1) nach einem der Ansprüche 1 bis 3, **dadurch gekennzeichnet, dass** die Blechpackung (6) aus Blechlagen (7,8) unterschiedlicher Werkstoffe gebildet ist.

5. Kupplungsplatte(1) nach Anspruch 4, **dadurch gekennzeichnet, dass** sich die unterschiedlichen Blechlagen (7,8) mindestens hinsichtlich eines der Parameter Wärmeleitfähigkeit, spezifische Wärmekapazität, Wärmeausdehnungskoeffizient und Dichte voneinander unterscheiden.

6. Kupplungsplatte(1) nach Anspruch 5, **dadurch gekennzeichnet, dass** mindestens eine der Blechlagen (7) aus einer Leichtmetalllegierung und mindestens eine weitere Blechlage (8) aus Stahlblech gebildet ist.

7. Kupplungsplatte(1) nach einem der Ansprüche 1 bis 6, **dadurch gekennzeichnet, dass** die Wandstärke der Blechlagen (7,8) geringer als die Wandstärke des das U-förmige Profil aufweisenden Blechteils (5) ist.

8. Kupplungsplatte(1) nach einem der Ansprüche 1 bis 7, **dadurch gekennzeichnet, dass** das das U-förmige Profil aufweisende Blechteil (5) formschlüssig in die äußerste Blechlage (7,8) eingreift und formschlüssige Verbindungen zwischen den einzelnen Blechlagen (7,8) gebildet sind.

9. Kupplungsplatte(1) nach einem der Ansprüche 1 bis 8, **dadurch gekennzeichnet, dass** das das U-förmige Profil aufweisende Blechteil (5) auf seiner der Reibfläche (4) abgewandten Seite Verstärkungsstrukturen (13) aufweist und durch Blechlagen (7,8) der Blechpackung (6) gebildete Kühlrippen (15) teilweise durch das Blechteil (5) abgedeckt sind.

10. Verfahren zur Herstellung einer Kupplungsplatte(1), mit folgenden Schritten:
- aus einer Blechplatine wird durch spanlose Umformung ein ringförmiges, ein U-förmiges Profil aufweisendes Blechteil (5) hergestellt,
- in das das U-förmige Profil wird eine Blechpackung (6) derart eingelegt, dass die Schmalseiten einzelner Blechlagen (7,8) eine einzige, ebene Reibfläche (4) bilden,
- durch Verprägen wird eine zumindest in Axialrichtung der Kupplungsplatte(1) sichernde, formschlüssige Verbindung zwischen der Blechpackung (6) und dem das U-förmige Profil aufweisenden Blechteil (5) hergestellt.

## Claims

1. Clutch plate (1) with an annular sheet metal part (5) having a U-shaped profile, and with a multilayer sheet metal packing (6) inserted into the U-shaped profile, wherein a friction face (4) is formed by narrow sides of individual sheet metal layers (7, 8).

2. Clutch plate (1) according to Claim 1, **characterized in that** multiple sheet metal layers (7, 8) are formed by a wound sheet metal strip (9, 10) .

3. Clutch plate (1) according to Claim 1, **characterized in that** multiple sheet metal layers (7, 8) are formed by individual sheet metal rings.

4. Clutch plate (1) according to one of Claims 1 to 3, **characterized in that** the sheet metal packing (6) consists of sheet metal layers (7, 8) of different materials.

5. Clutch plate (1) according to Claim 4, **characterized in that** the different sheet metal layers (7, 8) differ from one another at least with respect to one of the following parameters: thermal conductivity, specific heat capacity, coefficient of thermal expansion and density.

6. Clutch plate (1) according to Claim 5, **characterized in that** at least one of the sheet metal layers (7) is made of a light metal alloy and at least one other sheet metal layer (8) is made of steel sheet.

7. Clutch plate (1) according to one of Claims 1 to 6, **characterized in that** the wall thickness of the sheet metal layers (7, 8) is less than the wall thickness of the sheet metal part (5) having a U-shaped profile.

8. Clutch plate (1) according to one of Claims 1 to 7, **characterized in that** the sheet metal part (5) having the U-shaped profile engages in a form-fitting manner in the outermost sheet metal layer (7, 8), and form-fitting connections are formed between the individual sheet metal layers (7, 8).

9. Clutch plate (1) according to one of Claims 1 to 8, **characterized in that** the sheet metal part (5) having the U-shaped profile has reinforcing structures (13) on its side facing away from the friction face (4), and cooling ribs (15) formed by sheet metal layers (7, 8) of the sheet metal packing (6) are partially covered by the sheet metal part (5).

10. Method for producing a clutch plate (1), having the following steps:
- an annular sheet metal part (5) having a U-shaped profile is produced from a sheet metal blank by chip-free forming,
- a sheet metal packing (6) is inserted into the U-shaped profile such that the narrow sides of individual sheet metal layers (7, 8) form a single, planar friction face (4),
- a form-fitting connection, securing at least in the axial direction of the clutch plate (1), between the sheet metal packing (6) and the sheet metal part (5) having the U-shaped profile is produced by stamping.

## Revendications

1. Plateau d'embrayage (1), comprenant une partie en tôle (5) de forme annulaire, présentant un profil en forme de U, ainsi qu'un empilement de tôles (6) à plusieurs couches, inséré dans le profil en forme de U, une surface de friction (4) étant formée par les côtés étroits de couches de tôle individuelles (7, 8).

2. Plateau d'embrayage (1) selon la revendication 1, **caractérisé en ce que** plusieurs couches de tôle (7, 8) sont formées par une bande de tôle enroulée (9, 10).

3. Plateau d'embrayage (1) selon la revendication 1, **caractérisé en ce que** plusieurs couches de tôle (7, 8) sont formées par des tôles annulaires individuelles.

4. Plateau d'embrayage (1) selon l'une quelconque des revendications 1 à 3, **caractérisé en ce que** l'empilement de tôles (6) est formé par des couches de tôle (7, 8) en matériaux différents.

5. Plateau d'embrayage (1) selon la revendication 4, **caractérisé en ce que** les différentes couches de tôle (7, 8) se distinguent les unes des autres au moins en ce qui concerne l'un des paramètres suivants : une conductibilité thermique, une capacité thermique spécifique, un coefficient de dilatation thermique et une densité.

6. Plateau d'embrayage (1) selon la revendication 5, **caractérisé en ce qu'**au moins l'une des couches de tôle (7) est formée d'un alliage de métaux légers et au moins une couche de tôle supplémentaire (8) est formée d'une tôle d'acier.

7. Plateau d'embrayage (1) selon l'une quelconque des revendications 1 à 6, **caractérisé en ce que** l'épaisseur de paroi des couches de tôle (7, 8) est inférieure à l'épaisseur de paroi de la partie en tôle (5) présentant le profil en forme de U.

8. Plateau d'embrayage (1) selon l'une quelconque des revendications 1 à 7, **caractérisé en ce que** la partie en tôle (5) présentant le profil en forme de U s'engage par correspondance de formes dans la couche de tôle la plus extérieure (7, 8) et des connexions par engagement par correspondance de formes sont établies entre les couches de tôle individuelles (7, 8).

9. Plateau d'embrayage (1) selon l'une quelconque des revendications 1 à 8, **caractérisé en ce que** la partie en tôle (5) présentant le profil en forme de U présente, sur son côté opposé à la surface de friction (4), des structures de renforcement (13), et des ailettes de refroidissement (15) formées par des couches de tôle (7, 8) de l'empilement de tôles (6) sont recouvertes en partie par la partie en tôle (5).

10. Procédé de fabrication d'un plateau d'embrayage (1), comprenant les étapes suivantes :
- à partir d'une plaque de tôle, on fabrique, par façonnage sans enlèvement de copeaux, une partie en tôle (5) de forme annulaire, présentant un profil en forme de U,
- un empilement de tôle (6) est inséré dans le profil en forme de U de telle sorte que les côtés étroits de couches de tôle individuelles (7, 8) forment une surface de friction plane unique (4),
- une liaison par engagement par correspondance de formes fixant au moins dans la direction axiale le plateau d'embrayage (1) est réalisée par gaufrage entre l'empilement de tôle (6) et la partie en tôle (5) présentant le profil en forme de U.
